# EUROPÄISCHE PATENTSCHRIFT

(11) **EP 1 941 185 B1**
(45) Veröffentlichungstag und Bekanntmachung des Hinweises auf die Patenterteilung: **07.04.2010**
(21) Anmeldenummer: 06806589.5
(22) Anmeldetag: 27.10.2006
(51) Int. Cl.: F16H 61/04, F16H 61/46, F16H 47/02

(54) **VERFAHREN UND GETRIEBEANORDNUNG ZUM WECHSELN VON GANGSTUFEN**
METHOD AND TRANSMISSION ASSEMBLY FOR SHIFTING GEAR STEPS
PROCEDE ET SYSTEME DE TRANSMISSION DESTINES AU CHANGEMENT DE RAPPORTS

(30) Priorität: 27.10.2005 DE 102005051481; 09.12.2005 DE 102005058937
(43) Veröffentlichungstag der Anmeldung: 09.07.2008
(73) Patentinhaber: Brueninghaus Hydromatik GmbH, 89275 Elchingen (DE)
(72) Erfinder: FRASCH, Michael, 89081 Ulm (DE); VOGL, Karl-Heinz, 88444 Ummendorf (DE); DSCHIDA, Peter, 89075 Ulm (DE)
(74) Vertreter: Körfer, Thomas
(86) Internationale Anmeldenummer: PCT/EP2006/010377
(87) Internationale Veröffentlichungsnummer: WO 2007/048631

(56) Entgegenhaltungen:
- EP-A- 0 282 010
- EP-A- 0 752 545
- EP-A- 1 076 194
- EP-A- 1 277 991
- DE-A1- 4 026 659
- DE-A1- 4 431 864

## Beschreibung

Die Erfindung betrifft ein Verfahren und eine Getriebeanordnung zum Wechseln von Gangstufen in einem Getriebe mit einem hydrostatischen Getriebe und einem nachgeschalteten Schaltgetriebe.

Um den möglichen Übersetzungsbereich eines hydrostatischen Getriebes zu vergrößern, ist es bekannt, dem hydrostatischen Getriebe ein Schaltgetriebe nachzuschalten. Eine solche Getriebeanordnung ist aus der DE 42 23 846 A1 bekannt. Um in dem nachgeschalteten Schaltgetriebe einen Gangwechsel vornehmen zu können, wird der Hydromotor des hydrostatischen Getriebes auf einen Schwenkwinkel von etwa 0 verstellt. Damit wird das Abtriebsmoment des hydrostatischen Getriebes so weit reduziert, dass ein näherungsweise lastfreies Wechseln der eingelegten Gangstufen in dem nachgeschalteten Schaltgetriebe möglich ist. Die erforderliche Drehzahländerung der Abtriebswelle des hydrostatischen Motors erfolgt durch die Synchronringe des nachgeschalteten Schaltgetriebes. Damit wird nach dem Herausnehmen eines eingelegten Ganges durch das Anlegen des Synchronringe des einzulegenden Gangs der praktisch momentenfrei drehbare Hydromotor auf die der einzulegenden Fahrstufe entsprechende Drehzahl gebracht.

Als nachteilig hat sich dabei herausgestellt, dass durch die großen Drehzahlsprünge bedingt der Verschleiß der Synchronringe erheblich ist. Insbesondere wird durch die träge Masse des Hydromotors sowie das vorhandene Schleppmoment des Hydromotors die Synchronisiereinrichtung erheblich belastet. Bei Anlegen der Synchronringe während des Einlegens der nachfolgenden Schaltstufe ist es zudem nachteilig, dass das plötzlich auftretende zusätzliche Moment des Hydromotors für einen erheblichen Schaltdruck sorgt. EP 1076194 A zeigt die Merkmale des Oberbegriffs des Anspruchs 9.

Es ist daher Aufgabe der Erfindung, ein Verfahren und eine Getriebeanordnung zum Wechseln von Gangstufen in einem Getriebe mit einem hydrostatischen Getriebe und einem nachgeschalteten Schaltgetriebe zu schaffen, bei dem die Belastung der Synchronisiereinrichtung vermindert und somit die Lebensdauer der Synchronisiereinrichtung verlängert wird.

Die Aufgabe wird durch die Merkmale des Verfahrens gemäß Anspruch 1 sowie die Getriebeanordnung nach Anspruch 9 gelöst.

Gemäß dem Verfahren nach Anspruch 1 und der Getriebeanordnung nach Anspruch 9 wird beim Wechseln der Gangstufen eines Schaltgetriebes, welches einem hydrostatischen Getriebe nachgeschaltet ist, zunächst das Abtriebsmoment des hydrostatischen Motors verringert. Durch das Verringern des Abtriebsmoments des hydrostatischen Motors wird das nachgeschaltete Schaltgetriebe zumindest näherungsweise lastfrei gestellt, so dass die bis dahin eingelegte Gangstufe leicht herausgenommen werden kann. Entsprechend der Fahrsituation wird die der nachfolgend einzulegenden Gangstufe entsprechende Drehzahl des hydrostatischen Motors durch eine elektronische Steuereinheit ermittelt. Das Übersetzungsverhältnis des hydrostatischen Getriebes wird daraufhin so eingestellt, dass die tatsächliche Drehzahl des hydrostatischen Motors über der ermittelten entsprechenden Drehzahl liegt. Anschließend wird die einzulegende Gangstufe eingelegt, wobei durch die Synchronisiereinrichtung, die in dem nachgeschalteten Schaltgetriebe vorhanden ist, die tatsächliche Drehzahl des hydrostatischen Motors durch Reduzieren der Drehzahl des hydrostatischen Motors an die Fahrsituation angepasst wird. Es erfolgt immer eine Reduktion der Abtriebsdrehzahl während der Synchronisation unabhängig von der Richtung des Gangstufenwechsels.

Nach dem erfolgten Gangwechsel wird in herkömmlicher Weise das Übersetzungsverhältnis des hydrostatischen Getriebes durch entsprechendes Verstellen der hydrostatischen Maschinen geregelt.

Das Verstellen des Übersetzungsverhältnisses, so dass die Drehzahl des Hydromotors geringfügig über der ermittelten Abtriebsdrehzahl liegt, hat den Vorteil, dass durch die Synchronisiereinrichtung keine Beschleunigung des hydrostatischen Motors erfolgen muss. Vielmehr wird die Enddrehzahl der Abtriebswelle des Hydromotors durch eine geringe Reduzierung der Abtriebsdrehzahl des Hydromotors erreicht. Bei dieser Verzögerung des Hydromotors wird außerdem die interne Reibung des Hydraulikmotors verwendet, um seine Drehzahl zu reduzieren. Dies führt zu einer geringeren erforderlichen Reibarbeit seitens der Synchronisiereinrichtung. Der Verschleiß der verwendeten Synchronisiereinrichtung wird damit erheblich reduziert und zudem werden sanftere Gangwechsel durch Reduzierung des Schaltrucks ermöglicht.

In den Unteransprüchen sind vorteilhafte Weiterbildungen des erfindungsgemäßen Verfahrens aufgezeigt.

Dabei ist es besonders einfach, durch Verringern des Schluckvolumens des hydrostatischen Motors die Verringerung des Abtriebsmoments vor dem Einleiten des Schaltvorgangs zu bewirken. Zudem kann in vorteilhafter Weise die Änderung des Übersetzungsverhältnisses des hydrostatischen Getriebes durch eine Verstellung des Schluckvolumens des Hydromotors erfolgen. In diesem Fall kann eine gemeinsame elektronische Steuereinheit verwendet werden, bei der ein Eingriff in die Regelung der Hydropumpe nicht erforderlich ist. Weiterhin ist es vorteilhaft, neben der Verstellung des Hydromotors auch das Fördervolumen der Hydropumpe in den Verstellvorgang einzubeziehen, um besonders große Übersetzungssprünge zu ermöglichen.

Besonders vorteilhaft ist es auch, während des Wechselns der Gangstufen die zeitlichen Abläufe mit Hilfe einer elektronischen Steuereinheit so zu steuern, dass die Veränderung des Übersetzungsverhältnisses des hydrostatischen Getriebes gleichzeitig mit einer Stellbewegung eines Stellkolbens zum Wechseln der Gangstufen in dem nachgeschalteten Schaltgetriebe erfolgt. Finden dabei die Stellbewegungen zur Übersetzungsänderung des hydrostatischen Getriebes schnell genug statt, so kann eine kontinuierliche Stellbewegung der Betätigungseinrichtung zum Wechseln der Gangstufen vorgesehen werden. Dies hat den Vorteil, dass während des Gangwechsels ein Schieberad des Schaltgetriebes nicht in eine Zwischenposition gebracht werden muss, die einem Leerlauf entspricht. Vielmehr kann eine kontinuierliche Stellbewegung das Schieberad bewegen und somit in einem ununterbrochenen Vorgang zunächst ein Gang herausgenommen und ein weiterer Gang danach eingelegt werden.

Das Verfahren und die Getriebeanordnung werden anhand des in der Figur dargestellten Antriebs nachfolgend näher erläutert. Es zeigt:

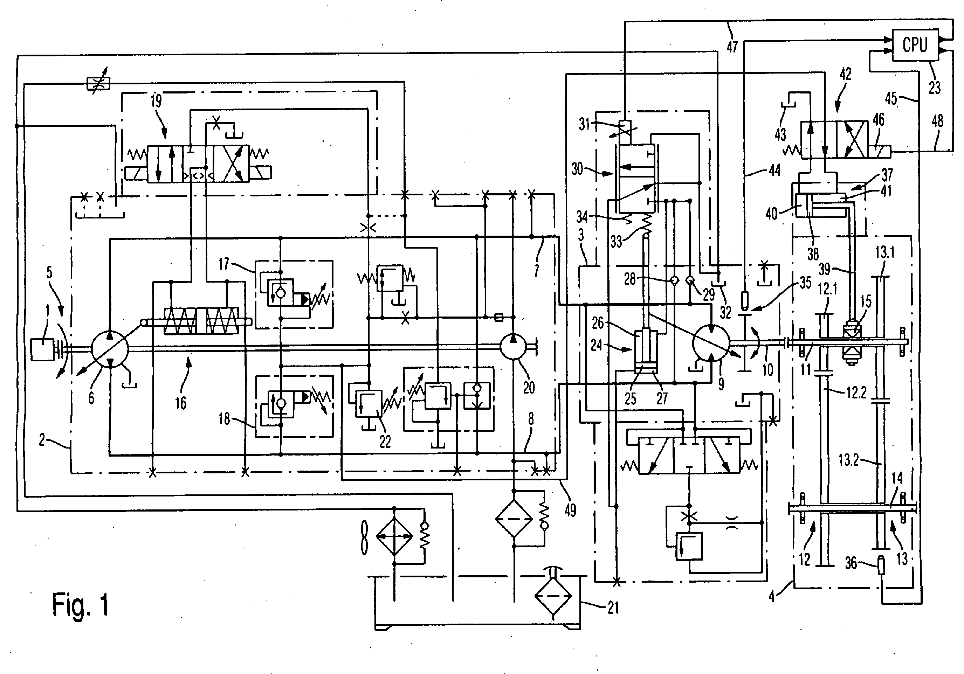

- Fig. 1: einen hydraulischen Schaltplan einer erfindungsgemäßen hydrostatisch-mechanischen Getriebeanordnung.

In der Fig. 1 ist eine hydrostatisch-mechanische Getriebeanordnung dargestellt. Bei dem hydrostatisch-mechanischen Getriebe wird durch eine Antriebsmaschine 1 eine Hydropumpeneinheit 2 angetrieben. Die Hydropumpeneinheit 2 ist hydrostatisch mit einer Hydromotoreinheit 3 verbunden. Der Hydromotoreinheit 3 ist ein Schaltgetriebe 4 nachgeschaltet und mit der Hydromotoreinheit 3 mechanisch gekoppelt.

Die Hydropumpeneinheit 2 ist über eine Triebwelle 5 mit der Antriebsmaschine 1 gekoppelt, so dass die Hydropumpe 6 der Hydropumpeneinheit 2 durch die Antriebsmaschine 1 angetrieben wird. Der dargestellte Antrieb kann beispielsweise ein Fahrantrieb für Bau-, Land- und Forstmaschinen oder ähnliche Fahrzeuge sein.

In dem dargestellten Ausführungsbeispiel ist die Hydropumpe 6 als eine in zwei Richtungen fördernde, verstellbare Hydropumpe ausgeführt.

Die Hydropumpe 6 ist über eine erste Arbeitsleitung 7 und eine zweite Arbeitsleitung 8 mit dem hydrostatischen Motor 9 verbunden. Der hydrostatische Motor 9 ist mit einer Abtriebswelle 10 gekoppelt, die mit einer Getriebeeingangswelle 11 verbunden ist. Das Schaltgetriebe 4 weist eine erste Getriebestufe 12 sowie eine zweite Getriebestufe 13 auf. Die erste Getriebestufe 12 und die zweite Getriebestufe 13 bestehen jeweils aus einem Zahnradpaar mit ersten Zahnrädern 12.1 und 13.1 bzw. zweiten Zahnrädern 12.2 und 13.2. Die ersten und zweiten Zahnräder 12.1 und 12.2 bzw. 13.1 und 13.2 befinden sich permanent im Eingriff.

Die ersten Zahnräder 12.1 und 13.1 sind frei drehbar auf der Getriebeeingangswelle 11 angeordnet und können über ein Schieberad 15 drehfest mit der Getriebeeingangswelle 11 verbunden werden. An dem Schieberad 15 befindet sich dabei eine Synchronisiereinrichtung, die bei Bildung der drehfesten Verbindung zwischen dem ersten Zahnrad 12.1 bzw. 13.1 und der Getriebeeingangswelle 11 die Getriebeeingangswelle 11 auf eine zur Drehzahl der Ausgangswelle 14 passende Drehzahl bringt.

Zur Verstellung des Übersetzungsverhältnisses des hydrostatischen Getriebes ist die Hydropumpeneinheit 2 mit einer Verstellvorrichtung 16 versehen, die auf einen Verstellmechanismus der Hydropumpe 6 wirkt. Zur Verstellung der in der Verstellvorrichtung 16 wirkenden Stelldrücke ist eine Stelldruckregelventil 19 vorgesehen, welches in dem dargestellten Ausführungsbeispiel elektromagnetisch betätigbar ist.

Weiterhin weist die Hydropumpeneinheit 2 eine Speiseeinrichtung auf. Die Speiseeinrichtung umfasst eine erste Speiseventileinheit 17 und eine zweite Speiseventileinheit 18. Die Speiseventileinheiten 17 und 18 führen in Abhängigkeit von den auftretenden Druckverhältnissen den Arbeitsleitungen 7 und 8 Hydraulikflüssigkeit zu. Hierzu wird Hydraulikflüssigkeit durch eine Hilfspumpe 20 aus einem Tankvolumen 21 angesaugt. Das von der Hilfspumpe 20 angesaugte Druckmittel wird in die Speiseseinrichtung gefördert, wobei der Speiseeinrichtung zur Verstellung des Fördervolumens der Hydropumpe 6 der erforderliche Stelldruck durch das Stelldruckregelventil 19 entnommen wird. Zur Absicherung der Speiseeinrichtung ist ein Druckbegrenzungsventil 22 vorgesehen.

Um den Ablauf beim Wechseln der Schaltstufen des Schaltgetriebes 4 zu steuern, ist eine elektronische Steuereinheit 23 vorgesehen. Die elektronische Steuereinheit 23 steuert den zeitlichen Ablauf sowohl für die Hydromotoreinheit 3 als auch für das Schaltgetriebe 4. Zum Betätigen eines Verstellmechanismus des hydrostatischen Motors 9 ist eine Verstellvorrichtung 24 vorgesehen. Die Verstellvorrichtung 24 umfasst einen doppelt wirkenden Hydraulikzylinder, in dem ein Stellkolben 25 angeordnet ist. Der Stellkolben 25 weist zwei Stellkolbenflächen auf, die entgegengesetzt orientiert sind. Die erste Stellkolbenfläche begrenzt in der Verstellvorrichtung 24 einen ersten Stelldruckraum 26 und die zweite Stellkolbenfläche begrenzt einen zweiten Stelldruckraum 27.

Der erste Stelldruckraum 26 wird über ein erstes bzw. zweites Rückschlagventil 28, 29 jeweils mit dem höheren der in den Arbeitsleitungen 7 bzw. 8 herrschenden Arbeitsdrücke beaufschlagt. Der in dem zweiten Stelldruckraum 27 herrschende Stelldruck ist durch ein Stelldruckregelventil 30 regelbar. Das Stelldruckregelventil 30 ist über einen Elektromagneten 31 betätigbar. In der dargestellten ersten Endposition des Stelldruckregelventils 30 ist der zweite Stelldruckraum 27 mit einem Tankvolumen 32 verbunden. Wird durch den Elektromagneten 31 das Stelldruckregelventil 30 in Richtung seiner zweiten Endposition verstellt, so wird der zweite Stelldruckraum 27 ebenfalls mit dem höheren der Arbeitsleitungsdrücke 7, 8 beaufschlagt, die dem Stelldruckregelventil 30 über die Rückschlagventile 28 bzw. 29 zugeführt werden. Die wirksame Stellkolbenfläche in dem zweiten Stelldruckraum 27 ist größer als in dem ersten Stelldruckraum 26. Eine Erhöhung des Stelldrucks in dem zweiten Stelldruckraum 27 bedeutet eine Verstellung des hydrostatischen Motors 9 in Richtung zunehmenden Schluckvolumens.

Die Stellbewegung des Stellkolbens 25 wird über eine Koppelfeder 33 auf das Stelldruckregelventil 30 rückgekoppelt. Das Stelldruckregelventil 30 nimmt somit jeweils eine Gleichgewichtsposition ein, die durch die Rückkoppelfeder 33, eine Einstellfeder 34 sowie die in entgegengesetzter Richtung wirkende Kraft des Elektromagneten 31 bestimmt wird. Zur Erfassung der Abtriebsdrehzahl der Abtriebswelle 10 des hydrostatischen Motors 9 ist ein Drehzahlmesser 35 vorgesehen. In dem dargestellten Ausführungsbeispiel ist der Drehzahlmesser 35 durch einen Messfühler sowie einen Induktionsgeber, der mit der Abtriebswelle 10 verbunden ist, ausgeführt.

In gleicher Weise wird die Drehzahl der Getriebeausgangswelle 14 erfasst. Hierzu dient ein Drehzahlmesser 36, der beispielsweise unmittelbar die Drehzahl über die Verzahnung des zweiten Zahnrads 13.2 der zweiten Getriebestufe 13 erfasst. Die Drehzahlmesser 35 und 36 erzeugen ein erstes Drehzahlsignal und ein zweites Drehzahlsignal, welche an die elektronische Steuereinheit 23 geleitet werden.

Zum Wechseln der eingelegten Gangstufen in dem Schaltgetriebe 4 wird, wie dies bereits erläutert wurde, das Schieberad 15, welches drehfest aber axial verschiebbar mit der Getriebeeingangswelle 11 verbunden ist, durch eine axiale Verschiebung in Eingriff mit dem ersten Zahnrad 12.1 der ersten Getriebestufe 12 oder dem ersten Zahnrad 13.1 der zweiten Getriebestufe 13 gebracht. Solange sich das Schieberad 15 nicht im Eingriff mit dem ersten Zahnrad 12.1 bzw. dem ersten Zahnrad 13.1 befindet, sind die ersten Zahnräder 12.1 und 13.1 drehbar auf der Getriebeeingangswelle 11 gelagert.

Die Verschiebung des Schieberades 15 wird durch eine hydraulische Betätigungsvorrichtung 37 bewirkt. Die Betätigungsvorrichtung 37 ist ebenfalls als doppelt wirkender Hydraulikzylinder ausgebildet, in dem ein Betätigungskolben 38 angeordnet ist. Der Betätigungskolben 38 ist über eine Kolbenstange mit einer Betätigungsstange 39 verbunden. Der Betätigungskolben 38 teilt den Hydraulikzylinder der Betätigungsvorrichtung 37 wiederum in einen ersten Stelldruckraum 40 und einen zweiten Stelldruckraum 41. Zum Ausführen eines Gangwechsels wird der Kolben 38 durch Ändern der Druckverhältnisse in dem ersten Stelldruckraum 40 und dem zweiten Stelldruckraum 41 verschoben. Die Stelldrücke in dem ersten Stelldruckraum 40 bzw. dem zweiten Stelldruckraum 41 werden über ein Schaltventil 42 eingestellt. Das Schaltventil 42 ist ein 4/2-Wegeventil, welches entgegen der Kraft einer Feder durch einen Elektromagneten 46 betätigbar ist.

In der in der Fig. 1 dargestellten Ausgangsstellung des Schaltventils 42, die durch die Feder definiert ist, wird der erste Stelldruckraum 40 der Betätigungseinrichtung 37 in Richtung eines Tankvolumens 43 entspannt. Gleichzeitig wird der zweite Stelldruckraum 41 mit einem Stelldruck beaufschlagt, der der Speiseeinrichtung der Hydropumpeneinheit 2 entnommen wird. Wird das Schaltventil 42 mit einem Stellsignal beaufschlagt, so verstellt der Elektromagnet 46 das Schaltventil 42 in seine zweite Schaltposition entgegen der Kraft der Feder. In dieser zweiten Schaltposition wird nun der erste Stelldruckraum 40 mit dem beaufschlagenden Speisedruck der Hydropumpeneinheit 2 beaufschlagt. Gleichzeitig wird der zweite Stelldruckraum 41 in Richtung des Tankvolumens 43 entspannt. In Folge der geänderten hydraulischen Kraftverhältnisse an dem Betätigungskolben 38 wird der Betätigungskolben 38, die Kolbenstange sowie die Betätigungsstange 39 in entgegengesetzter Richtung betätigt. Durch Wechseln der Druckverhältnisse in der Betätigungseinrichtung 37 wird somit das Schieberad 15 entweder mit dem ersten Zahnrad 12.1 oder dem ersten Zahnrad 13.1 der ersten bzw. zweiten Getriebestufe 12, 13 gebracht.

Die von dem Drehzahlmesser 35 bzw. 36 ermittelten Drehzahlsignale werden über entsprechende Signalleitungen 44, 45 der gemeinsamen elektronischen Steuereinheit 23 zugeführt. Von der elektronischen Steuereinheit 23 werden Stellsignale an den Elektromagneten 31 bzw. den Elektromagneten 46 ausgegeben. Die Ausgänge der elektronischen Steuereinheit 23 sind hierzu über Signalleitungen 47, 48 mit dem Elektromagneten 31 bzw. 46 des Stelldruckregelventils 30 bzw. des Schaltventils 42 verbunden.

Nachfolgend wird das Verfahren zum Wechseln der Gänge beschrieben. Das Schieberad 15 befindet sich im Eingriff mit dem ersten Zahnrad 12.1 der ersten Getriebestufe 12. Die Fahrgeschwindigkeit wird durch die Drehzahl der Antriebsmaschine 1 sowie das eingestellte Übersetzungsverhältnis des hydrostatischen Getriebes bestehend aus der Hydropumpeneinheit 2 sowie der Hydromotoreinheit 3 bestimmt. Soll nun das Übersetzungsverhältnis des nachgeschalteten Schaltgetriebes 4 geändert und somit die zweite Getriebestufe 13 eingelegt werden, so wird zunächst durch Verändern des Übersetzungsverhältnisses des hydrostatischen Getriebes das Antriebsmoment verringert.

Im einfachsten Fall erfolgt dies, indem das Schluckvolumen des hydrostatischen Motors 9 in Richtung eines minimalen Wert verändert wird. Dieser minimale Wert ist im einfachsten Fall ein verschwindendes Schluckvolumen. Dies kann beispielsweise durch Einstellen einer Neutrallage einer Schwenkscheibe bei Verwendung einer Schrägscheibenaxialkolbenmaschine erfolgen.

Nachdem das Abtriebsmoment des hydrostatischen Getriebes in beschriebener Weise verringert ist, wird durch die elektronische Steuereinheit 23 der Schaltvorgang eingeleitet. Zunächst war das Schieberad 15 im Eingriff mit dem ersten Zahnrad 12.1 der ersten Getriebestufe 12. Hierzu war der erste Stelldruckraum 40 mit dem Tankvolumen 43 über das Schaltventil 42 verbunden. Der Elektromagnet 46 des Schaltventils 42 war nicht bestromt, so dass das Schaltventil 42 durch die Druckfeder in seiner in der Fig. 1 dargestellten ersten Endposition gehalten wurde. Die elektronische Steuereinheit 23 leitet nun den Schaltvorgang ein, indem der Elektromagnet 46 bestromt und somit das Schaltventil 42 in seine zweite Endposition gebracht wird. Dabei wird über das Schaltventil 42 der erste Stelldruckraum 40 mit der Speisedruckzuleitung 49 verbunden und gleichzeitig der zweite Stelldruckraum 41 in das Tankvolumen 43 entspannt. In Folge dessen bewegt sich der Betätigungskolben 38 in der Fig. 1 nach rechts, so dass das Schieberad 15 zunehmend von dem Zahnrad 12.1 entfernt wird.

Sobald der Eingriff zwischen dem Schieberad 15 und dem Zahnrad 12.1 gelöst ist, wird der hydrostatische Motor 9 auf eine neue Abtriebsdrehzahl gestellt, die über einer der einzulegenden Gangstufe entsprechenden Abtriebsdrehzahl bzw. Getriebeeingangsdrehzahl der Getriebeeingangswelle 11 liegt. Diese entsprechende Abtriebsdrehzahl für die Abtriebswelle 10 wird durch die elektronische Steuereinheit 23 anhand des Übersetzungsverhältnisses der einzulegenden zweiten Gangstufe 13 ermittelt. Dabei wird die durch den Drehzahlmesser 36 ermittelte Drehzahl der Getriebeausgangswelle 14 berücksichtigt und so die nach Wiederherstellen der Antriebsverbindung entsprechende Drehzahl der Getriebeeingangswelle 11 bzw. der Abtriebswelle 10 des hydrostatischen Motors 9 bestimmt.

Entsprechend der einzustellenden erhöhten Drehzahl des hydrostatischen Motors 9 wird über die Signalleitung 47 von der elektronischen Steuereinheit 23 ein Stellsignal an den Elektromagneten 31 ausgegeben. Der Elektromagnet 31 ist vorzugsweise ein Proportionalmagnet, so dass entsprechend der Größe des Stellsignals durch das Stelldruckregelventil 30 eine Position eingenommen wird, die einem bestimmten Schluckvolumen des hydrostatischen Motors 9 entspricht. Die Verstellung des Schwenkwinkels des hydrostatischen Motors 9 erfolgt in der Zeit, die die Betätigungseinrichtung 37 braucht, um die Verbindung des Schieberads 15 mit dem Zahnrad 12.1 zu lösen und die Verbindung mit dem Zahnrad 13.1 herzustellen. Die elektronische Steuereinheit 23 gibt die Stellsignale an die Elektromagneten 31 bzw. 46 hierzu zeitlich abgestimmt aus.

Zu dem Zeitpunkt, zu dem die Stellbewegung der Betätigungseinrichtung 37 abgeschlossen ist, hat der hydrostatische Motor 9 bereits die erhöhte Drehzahl erreicht. Das Schieberad 15 wird nunmehr in Eingriff mit dem ersten Zahnrad 13.1 der zweiten Gangstufe 13 gebracht. Dabei wird die Getriebeeingangswelle 11, die mit der Abtriebswelle 10 der hydrostatischen Motors 9 verbunden ist, durch die Synchronisiereinrichtung, die an dem Schieberad 15 angeordnet ist, abgebremst und somit ein Drehzahlausgleich zwischen dem ersten Zahnrad 13.1 der zweiten Getriebestufe 13 sowie der Getriebeeingangswelle 11 und damit der Abtriebswelle 10 des hydrostatischen Motors 9 erreicht.

Ein Schaltvorgang von der zweiten Getriebestufe 13 auf die erste Getriebestufe 12 erfolgt dementsprechend durch eine Betätigung der Betätigungseinrichtung 37 in entgegengesetzter Richtung. Auch hierbei wird wiederum die Abtriebswelle 10 auf eine erhöhte Drehzahl gebracht, die über einer ermittelten entsprechende Drehzahl liegt, welche durch die tatsächliche Drehzahl der Getriebeausgangswelle 14 sowie das Übersetzungsverhältnis der ersten Getriebestufe 12 und die durch den zweiten Drehzahlmesser 36 gemessene Abtriebsdrehzahl des Schaltgetriebes 4 festgelegt ist.

Bei dem dargestellten Ausführungsbeispiel wird in einfacher Weise durch die elektronische Steuereinheit 23 lediglich das Schaltgetriebe 4 bzw. dessen Betätigungsvorrichtung 37 sowie die Hydromotoreinheit 3 mit Stellsignalen versorgt. Es kann jedoch ebenso gut in die Steuerung durch die elektronische Steuereinheit 23 die Verstellung des Schwenkwinkels der Hydropumpe 6 eingebunden sein. In diesem Fall wird bei der Verstellung des Übersetzungsverhältnisses des hydrostatischen Getriebes sowohl der Schwenkwinkel der Hydropumpe 6 als auch der Schwenkwinkel des hydrostatischen Motors 9 verändert. Alternativ kann auch die Drehzahlanpassung der Abtriebsdrehzahl der Abtriebswelle 10 allein durch eine Verstellung des Schwenkwinkels der Hydropumpe 6 bei einem fest eingestellten Schwenkwinkel des hydrostatischen Motors 9 erfolgen.

## Patentansprüche

1. Verfahren zum Wechseln von Gangstufen (12, 13) in einem Getriebe mit einem hydrostatischen Getriebe und einem nachgeschalteten Schaltgetriebe (4) mit einer darin enthaltenen Synchronisationseinrichtung mit folgenden Verfahrensschritten:
- Verringern eines Abtriebsmoments eines hydrostatischen Motors (9) und einer mit diesem verbundenen Getriebeeingangswelle (11),
- Herausnehmen der eingelegten Gangstufe (12, 13) des nachgeschalteten Schaltgetriebes (4),
- Ermitteln einer der einzulegenden Gangstufe (12, 13) entsprechenden Drehzahl des hydrostatischen Motors (9) und der mit diesem verbundenen Getriebeeingangswelle (11),
- Verstellen des Übersetzungsverhältnisses des hydrostatischen Getriebes, so dass die Drehzahl des hydrostatischen Motors (9) und der mit diesem verbundenen Getriebeeingangswelle (11), unabhängig von der Richtung des Gangwechsels, höher als die ermittelte entsprechende Drehzahl ist und
- Einlegen der einzulegenden Gangstufe (13, 12).

2. Verfahren nach Anspruch 1,
**dadurch gekennzeichnet,**
**dass** zum Verringern des Abtriebsmoments des hydrostatischen Motors (9) dessen Schluckvolumen auf einen minimalen Wert verstellt wird.

3. Verfahren nach Anspruch 1 oder 2,
**dadurch gekennzeichnet,**
**dass** zur Verstellung des Abtriebsmoments des hydrostatischen Motors (9) und zum Herausnehmen und Einlegen der Gangstufen (12, 13) durch eine elektronische Steuereinheit (23) elektrische Signale ausgegeben werden.

4. Verfahren nach einem der Ansprüche 1 bis 3,
**dadurch gekennzeichnet,**
**dass** die der einzulegenden Gangstufe (12, 13) entsprechende Drehzahl durch eine elektronische Steuereinheit (23) ermittelt wird.

5. Verfahren nach Anspruch 4,
**dadurch gekennzeichnet,**
**dass** der elektronischen Steuereinheit (23) zumindest ein Drehzahlsignal über die Abtriebsdrehzahl des nachgeschalteten Schaltgetriebes (4) zugeführt wird.

6. Verfahren nach einem der Ansprüche 1 bis 5,
**dadurch gekennzeichnet,**
**dass** zur Verstellung der Drehzahl des hydrostatischen Motors (9) auf eine über der ermittelten Abtriebsdrehzahl liegende Drehzahl das Schluckvolumen des hydrostatischen Motors (9) verstellt wird.

7. Verfahren nach einem der Ansprüche 1 bis 6,
**dadurch gekennzeichnet,**
**dass** zur Verstellung der Drehzahl des hydrostatischen Motors (9) auf eine über der ermittelten Drehzahl liegende Drehzahl ein Verdrängungsvolumen einer hydrostatischen Hydropumpeneiheit (2) des hydrostatischen Getriebes verstellt wird.

8. Verfahren nach einem der Ansprüche 6 oder 7,
**dadurch gekennzeichnet,**
**dass** die Verstellung des hydrostatischen Motors und/oder der Hydropumpeneinheit (2) während einer Stellbewegung eines Betätigungskolbens (38) zum Wechseln der Gangstufen (12, 13) erfolgt.

9. Getriebeanordnung mit einem hydrostatischen Getriebe umfassend eine Hydropumpeneinheit (2) und einen hydrostatischen Motor (9) und mit einem dem hydrostatischen Getriebe nachgeschalteten Schaltgetriebe (4) mit zumindest einer ersten Getriebestufe (12) und einer zweiten Getriebestufe (13),
**dadurch gekennzeichnet,**
**dass** vor dem Einlegen einer Getriebestufe (12, 13) der hydrostatische Motor (9) und eine mit diesem verbundenen Getriebeeingangswelle (11), unabhängig von der Richtung des Gangwechsels, auf eine gegenüber einer der einzulegenden Getriebestufe (12, 13) erhöhte Drehzahl einstellbar ist und das Schaltgetriebe (4) eine Synchronisationseinrichtung enthält.

10. Getriebeanordnung nach Anspruch 9,
**dadurch gekennzeichnet,**
**dass** zur Einstellung der erhöhten Drehzahl des hydrostatischen Motors (9) und zum Herausnehmen bzw. Einlegen einer Gangstufe (12, 13) durch eine elektronische Steuereinheit (23) Stellsignale ausgebbar sind.

11. Getriebeanordnung nach Anspruch 9 oder 10,
**dadurch gekennzeichnet,**
**dass** durch die elektronische Steuereinheit (23) eine der einzulegenden Getriebestufe (12,13) entsprechende Drehzahl ermittelbar ist.

12. Getriebeanordnung nach einem der Ansprüche 9 bis 11,
**dadurch gekennzeichnet,**
**dass** der elektronischen Steuereinheit (23) ein Drehzahlsignal über die Abtriebsdrehzahl des Schaltgetriebes (4) zuführbar ist.

13. Getriebeanordnung nach einem der Ansprüche 9 bis 12,
**dadurch gekennzeichnet,**
**dass** zur Einstellung der erhöhten Drehzahl des hydrostatischen Motors (9) das Schluckvolumen des hydrostatischen Motors (9) verstellbar ist.

14. Getriebeanordnung nach einem der Ansprüche 9 bis 13,
**dadurch gekennzeichnet,**
**dass** zur Einstellung der erhöhten Drehzahl des hydrostatischen Motors (9) das Fördervolumen der Hydropumpeneinheit (2) verstellbar ist.

15. Getriebeanordnung nach einem der Ansprüche 9 bis 14,
**dadurch gekennzeichnet,**
**dass** die Einstellung der erhöhten Drehzahl des hydrostatischen Motors (9) und das Einlegen einer Getriebestufe (12, 13) gleichzeitig durchführbar sind.

## Claims

1. Method of changing gears (12, 13) in a transmission with a hydrostatic transmission and a manual gearbox (4), with a synchronising device included in it, connected downstream from it, and with the following method steps:
- reducing an output torque of a hydrostatic motor (9) and a gearbox input shaft (11) connected to it,
- disengaging the engaged gear (12, 13) of the manual gearbox (4) which is connected downstream,
- determining a rotational speed of the hydrostatic motor (9) and the gearbox input shaft (11) connected to it, corresponding to the gear (12, 13) to be engaged,
- adjusting the gear ratio of the hydrostatic transmission, so that the rotational speed of the hydrostatic motor (9) and the gearbox input shaft (11) connected to it, irrespective of the direction of the gear change, is higher than the determined corresponding rotational speed, and
- engaging the gear (13, 12) to be engaged.

2. Method according to Claim 1,
**characterized in that**
to reduce the output torque of the hydrostatic motor (9), its swallowing capacity is adjusted to a minimum value.

3. Method according to Claim 1 or 2,
**characterized in that**
to adjust the output torque of the hydrostatic motor (9) and to disengage and engage the gears (12, 13), electrical signals are output by an electronic control unit (23).

4. Method according to one of Claims 1 to 3,
**characterized in that**
the rotational speed corresponding to the gear (12, 13) to be engaged is determined by an electronic control unit (23).

5. Method according to Claim 4,
**characterized in that**
at least one rotational speed signal about the output rotational speed of the downstream manual gearbox (4) is fed to the electronic control unit (23).

6. Method according to one of Claims 1 to 5,
**characterized in that**
to adjust the rotational speed of the hydrostatic motor (9) to a rotational speed which is above the determined output rotational speed, the swallowing capacity of the hydrostatic motor (9) is adjusted.

7. Method according to one of Claims 1 to 6,
**characterized in that**
to adjust the rotational speed of the hydrostatic motor (9) to a rotational speed which is above the determined rotational speed, a displacement volume of a hydrostatic hydraulic pump unit (2) of the hydrostatic transmission is adjusted.

8. Method according to one of Claims 6 or 7,
**characterized in that**
the hydrostatic motor and/or the hydraulic pump unit (2) is adjusted during a positioning movement of an actuating piston (38) to change gears (12, 13).

9. Transmission arrangement with a hydrostatic transmission comprising a hydraulic pump unit (2) and a hydrostatic motor (9), and with a manual gearbox (4) which is connected downstream from the hydrostatic transmission, with at least one first transmission stage (12) and a second transmission stage (13), **characterized in that**
before a transmission stage (12, 13) is engaged, the hydrostatic motor (9) and a gearbox input shaft (11) connected to it, irrespective of the direction of the gear change, can be set to a rotational speed which is increased compared with the transmission stage (12, 13) to be engaged, and the manual gearbox (4) contains a synchronising device.

10. Transmission arrangement according to Claim 9,
**characterized in that**
to set the increased rotational speed of the hydrostatic motor (9) and to disengage and/or engage a gear (12, 13), positioning signals can be output by an electronic control unit (23).

11. Transmission arrangement according to Claim 9 or 10,
**characterized in that**
the electronic control unit (23) can determine a rotational speed corresponding to the transmission stage (12, 13) to be engaged.

12. Transmission arrangement according to one of Claims 9 to 11,
**characterized in that**
a rotational speed signal about the output rotational speed of the manual gearbox (4) can be fed to the electronic control unit (23).

13. Transmission arrangement according to one of Claims 9 to 12,
**characterized in that**
to set the increased rotational speed of the hydrostatic motor (9), the swallowing capacity of the hydrostatic motor (9) can be adjusted.

14. Transmission arrangement according to one of Claims 9 to 13,
**characterized in that**
to set the increased rotational speed of the hydrostatic motor (9), the conveyed volume of the hydraulic pump unit (2) can be adjusted.

15. Transmission arrangement according to one of Claims 9 to 14,
**characterized in that**
setting the increased rotational speed of the hydrostatic motor (9) and engaging a transmission stage (12, 13) can be done simultaneously.

## Revendications

1. Procédé pour le changement de rapports de vitesse (12,13) dans un système de transmission avec une transmission hydrostatique et une boîte de vitesses (4) montée en aval, avec un dispositif de synchronisation contenu dans celle-ci, comportant les étapes suivantes:
- diminution d'un couple de sortie d'un moteur hydrostatique (9) et d'un arbre d'entrée (11) de la boîte de vitesses, relié audit moteur,
- désengagement du rapport de vitesse (12, 13) engagé de la boîte de vitesses (4) montée en aval,
- détermination d'une vitesse de rotation, correspondant au rapport de vitesse (12, 13) engagé, du moteur hydrostatique (9) et de l'arbre d'entrée (11) relié à ce dernier,
- réglage du rapport de développement de la transmission hydrostatique, de telle sorte que la vitesse de rotation du moteur hydrostatique (9) et de l'arbre d'entrée (11) relié à celui-ci, indépendamment de la direction du changement de rapport de vitesse, est plus élevée que la vitesse de rotation correspondante déterminée, et
- engagement du rapport de vitesse (12, 13) à engager.

2. Procédé selon la revendication 1, **caractérisé en ce que** pour diminuer le couple de sortie du moteur hydrostatique (9), le volume d'absorption de celui-ci est réglé à une valeur minimale.

3. Procédé selon la revendication 1 ou 2, **caractérisé en ce que** pour régler le couple de sortie du moteur hydrostatique (9) et pour désengager et engager les rapports de vitesse (12, 13), des signaux électriques sont délivrés par une unité de commande (23) électronique.

4. Procédé selon l'une quelconque des revendications 1 à 3, **caractérisé en ce que** la vitesse de rotation correspondant au rapport de vitesse (12, 13) à engager est déterminée par une unité de commande (23) électronique.

5. Procédé selon la revendication 4, **caractérisé en ce qu'**au moins un signal relatif à la vitesse de rotation de sortie de la boîte de vitesses (4), montée en aval, est acheminé vers l'unité de commande (23) électronique.

6. Procédé selon l'une quelconque des revendications 1 à 5, **caractérisé en ce que** pour régler la vitesse de rotation du moteur hydrostatique (9) à une vitesse de rotation supérieure à la vitesse de rotation de sortie déterminée, il est effectué un réglage du volume d'absorption du moteur hydrostatique (9).

7. Procédé selon l'une quelconque des revendications 1 à 6, **caractérisé en ce que** régler la vitesse de rotation du moteur hydrostatique (9) à une vitesse de rotation supérieure à la vitesse de rotation déterminée, il est effectué un réglage du volume de refoulement d'une unité de pompe hydraulique (2) hydrostatique de la transmission hydrostatique.

8. Procédé selon la revendication 6 ou 7, **caractérisé en ce que** le réglage du moteur hydrostatique et/ou de l'unité de pompe hydraulique (2) est effectué pendant un mouvement de réglage d'un piston d'actionnement (38) pour le changement des rapports de vitesse (12, 13).

9. Système de transmission avec une transmission hydrostatique, comportant une unité de pompe hydraulique (2) et un moteur hydrostatique (9), et avec une boîte de vitesses (4), montée en aval de la transmission hydrostatique, avec au moins un premier rapport de vitesse (12) et un deuxième rapport de vitesse (13),
**caractérisé en ce qu'**avant l'engagement d'un rapport de vitesse (12, 13), le moteur hydrostatique (9) et un arbre d'entrée (11) de la boîte de vitesses, relié audit moteur, peuvent être réglés, indépendamment de la direction du rapport de vitesse, à une vitesse de rotation plus élevée que celle du rapport de vitesse (12, 13) engagé, et la boîte de vitesses (4) contient un dispositif de synchronisation.

10. Système de transmission selon la revendication 9, **caractérisé en ce que** pour régler la vitesse de rotation plus élevée du moteur hydrostatique (9) et pour désengager ou engager un rapport de vitesse (12, 13), des signaux de réglage peuvent être délivrés par une unité de commande (23) électronique.

11. Système de transmission selon la revendication 9 ou 10, **caractérisé en ce qu'**une vitesse de rotation correspondant au rapport de vitesse (12, 13) à engager peut être déterminée par l'unité de commande (23) électronique.

12. Système de transmission selon l'une quelconque des revendications 9 à 11, **caractérisé en ce qu'**un signal relatif à la vitesse de rotation de sortie de la boîte de vitesses (4) peut être acheminé vers l'unité de commande (23) électronique.

13. Système de transmission selon l'une quelconque des revendications 9 à 12, **caractérisé en ce que** le volume d'absorption du moteur hydrostatique (9) peut être réglé en vue du réglage de la vitesse de rotation plus élevée du moteur hydrostatique (9).

14. Système de transmission selon l'une quelconque des revendications 9 à 13, **caractérisé en ce que** le volume de refoulement de l'unité de pompe hydraulique (2) peut être réglé en vue du réglage de la vitesse de rotation plus élevée du moteur hydrostatique (9).

15. Système de transmission selon l'une quelconque des revendications 9 à 14, **caractérisé en ce que** le réglage de la vitesse de rotation plus élevée du moteur hydrostatique (9) et l'engagement d'un rapport de vitesse (12, 13) peuvent être effectués simultanément.
